# EUROPÄISCHE PATENTANMELDUNG

(11) **EP 2 942 554 A1**
(43) Veröffentlichungstag der Anmeldung: **11.11.2015**
(21) Anmeldenummer: 15167003.1
(22) Anmeldetag: 08.05.2015
(51) Int. Cl.: F16L 13/00, F16B 1/00, B23P 11/02, C22C 14/00, C22C 16/00, C22C 19/03, C22C 27/02, F16B 7/04

(54) **STECKELEMENT MIT WENIGSTENS EINEM KÖRPERTEIL AUS EINER FORMGEDÄCHTNISLEGIERUNG**

(30) Priorität: 08.05.2014 DE 102014006616
(71) Anmelder: Martin, Norbert, 29221 Celle (DE)
(72) Erfinder: Martin, Norbert, 29221 Celle (DE)
(74) Vertreter: LS-MP von Puttkamer Berngruber Loth Spuhler

(57) **Zusammenfassung**

Steckelement, mit wenigstens einem Körperteil (21; 31; 32; 33), das als Werkstoff eine Formgedächtnislegierung (14) (shape-memory-alloy) umfasst und mit wenigstens einem Trägerteil (2; 3) derart verbindbar ist, dass das Körperteil (21; 31; 32; 33) zumindest bereichsweise mit seinem Umfang radial am Trägerteil (2; 3) anliegt. Das Körperteil (21; 31; 32; 33) ist abkühlbar und zu einer ersten Form derart mechanisch deformierbar, dass es beim nachfolgenden Erwärmen in eine zweite Form überführbar ist, in der das Körperteil (21; 31; 32; 33) radial am Trägerteil (2; 3) anliegt.

## Beschreibung

Die vorliegende Erfindung betrifft ein Steckelement, mit wenigstens einem Körperteil, das als Werkstoff eine Formgedächtnislegierung (shape-memory-alloy) umfasst und mit wenigstens einem Trägerteil derart verbindbar ist, dass das Körperteil zumindest bereichsweise mit seinem Umfang radial am Trägerteil anliegt.

Die Erfindung betrifft weiter ein Reparaturset zur Herstellung von Steckelementen und ein Verfahren zur Herstellung eines Steckelements mit einem auf einer Formgedächtnislegierung (shape-memoryalloy) basierenden Körperteil.

Aus der DE60 2004 000 994 T2 geht eine Formgedächtnislegierung hervor, die Co, Ni und Al umfasst. Die Formgedächtnislegierung weist dabei eine Zweiphasenstruktur auf, welche eine β-Phase mit B2-Struktur und eine γ-Phase mit fc-Struktur umfasst. Mindestens 40-Flächenprozent der Kristallkorngrenzen der β-Phase werden von der γ-Phase eingenommen. Die Legierung enthält 23 bis 27 Atomprozent Al, 39 bis 45 Atomprozent Co, 28 bis 38 Atomprozent Ni als unvermeidbare Verunreinigungen.

Aus dem Stand der Technik bekannte Formgedächtnislegierungen (shape-memory-alloy) erweisen sich als nachteilig, da diese Legierungen zur Wahrung der Formstabilität zur Fertigung, Lagerung und Montage in flüssigem Stickstoff gehalten werden müssen. Eine derartige Fertigung erweist sich als prozesstechnisch aufwendig und teuer.

Zudem stellt die Handhabung von flüssigem Stickstoff ein erhöhtes Gesundheitsrisiko dar. Der Flüssigstickstoff ist Stickstoff im flüssigen Aggregatszustand, der unter Normaldruck bei 77 K siedet.

Die Expansionsrate vom flüssigen Zustand in den gasförmigen Zustand beträgt bei Stickstoff 1:694. Beim Sieden von Flüssigstickstoff besteht dadurch erhöhte Explosionsgefahr.

Aufgrund der niedrigen Temperatur kann der Flüssigstickstoff bei der Verarbeitung in kürzester Zeit zu Erfrierungen an den Händen und am Körper führen.

Insbesondere dann, wenn Flüssigstickstoff verdunstet reduziert er die Sauerstoffkonzentration in der Luft, wodurch insbesondere in geschlossenen Räumen Sauerstoffmangel auftreten kann.

Dies ist besonders gefährlich, da Stickstoff an sich geruchs-, farb- und geschmacklos ist, so dass ohne vorhergehende Vorwarnung Atemnot eintreten kann.

An organischen Materialien bewirkt flüssiger Stickstoff zudem eine starke Oxidation.

Die Erfindung stellt sich daher die Aufgabe, ein Steckelement zu schaffen, das auf einem Werkstoff aus einer Formgedächtnislegierung basiert, das jedoch auch außerhalb einer Flüssigstickstoff-Umgebung bearbeitet, verarbeitet, gelagert und montiert werden kann.

Weiter wird ein Steckelement bereitgestellt, das sowohl eine Dichtungsfunktion als auch eine Haltefunktion erfüllt. Das Steckelement erfüllt darüber hinaus auch andere Funktionen wie z.B. eine Kupplungsfunktion oder eine Verbindungsfunktion.

Das erfindungsgemäße Steckelement verschließt in genormter Größe insbesondere Rohrprofilenden unterschiedlichen Durchmessers.

Das erfindungsgemäße Steckelement verbindet dicht miteinander Rohrprofile gleichen- und/oder unterschiedlichen Durchmessers ohne zusätzliche Dichtmittel verwenden zu müssen.

Die Formgedächtnislegierung des Steckelements weist eine austenitische bzw. eine martensitische Phase auf, die einen Einsatz bzw. eine Verwendung des Steckelements insbesondere unter Erfüllung der spezifischen Sicherheitsvorschriften im Luftverkehr möglich macht.

Es wird ferner ein Steckelement geschaffen, das sich durch eine verbesserte Elastizität und eine optimierte Dichteigenschaft auszeichnet.

Die erfindungsgemäße Aufgabe wird durch ein Steckelement, mit wenigstens einem Körperteil gelöst, das als Werkstoff eine Formgedächtnislegierung (shape-memory-alloy) umfasst und mit wenigstens einem Trägerteil derart verbindbar ist, dass das Körperteil zumindest bereichsweise mit seinem Umfang radial am Trägerteil anliegt. Das Körperteil ist abkühlbar und zu einer ersten Form derart mechanisch deformierbar, dass es beim nachfolgenden Erwärmen in eine zweite Form überführbar ist, in der das Körperteil radial fest und dicht am Trägerteil anliegt.

Die Aufgabe wird weiter durch ein Reparaturset gelöst, das wenigstens zwei Steckelemente umfasst, deren Körperteile unterschiedliche Längen aufweisen.

Zusätzlich wird die Aufgabe durch ein Verfahren zur Herstellung eines Steckelements gelöst, bei dem das Steckelement einen Körperteil umfasst, der auf einer Formgedächtnislegierung basiert.

Die Erfindung wird im Folgenden exemplarisch und in keiner Weise einschränkend am Beispiel eines Steckelements beschrieben, das mindestens eine Drahtwindung aus einer Formgedächtnislegierung umfasst.

Erfindungsgemäß wird der Draht aus einer Formgedächtnislegierung (shape-memory-alloy) einem Kaltumformungsprozess unterzogen, um den Draht auf die gewünschte Länge und den gewünschten Durchmesser zu bringen.

Die erforderliche Aufweitung des Innendurchmessers des Steckelements durch Kaltumformung kann im Wege der Halbzeugfertigung erreicht werden. Unter Kaltumformung versteht die Erfindung das Umformen von Metallen bei einer Temperatur deutlich unterhalb der Rekristallisationstemperatur.

Der Draht aus Formgedächtnislegierung kann bevorzugt durch eine Matrize gezogen werden und auf einen gewünschten Durchmesser gebracht werden. Auf diese Weise lässt sich der Außendurchmesser des Steckelements nach Verschweißen der Drahtwindungen miteinander unter Wahrung der Flexibilität der Formgedächtnislegierung minimieren.

Aufgrund einer Wandstärke von bevorzugt 1 bis 4 oder 5 mm kann der Außendurchmesser des Steckelements an die jeweiligen Erfordernisse beziehungsweise die vorherrschenden Platzverhältnisse angepasst werden. Das Körperteil des Steckelements weist wenigstens zwei oder mehr Drahtwindungen aus einer Formgedächtnislegierung auf. Die Drahtwindungen können in ihrer Breite und in ihrer Wandstärke variieren.

Das wenigstens eine Körperteil des Steckelements umfasst wenigstens eine Windung aus einem Draht, der aus einer Formgedächtnislegierung gefertigt ist. Die Breite und die radiale Dicke des Drahtes können variieren. Die Breite des Drahtes beträgt bevorzugt einen Wert zwischen 1 mm und 5 mm. Die Dicke der Drahtwindung weist bevorzugt einen Wert von 3 mm auf. Das Körperteil des Steckelements umfasst wenigstens eine Drahtwindung.

Die Drahtwindungen können dabei unterschiedliche Bauformen aufweisen. Beispielhaft und in keiner Weise ausschließlich können die Windungen schraubenförmig oder spiralförmig gewickelt sein. Es kann aber auch jede andere geeignete Windungsform vorliegen.

Gleichzeitig kann unter martensitischen Temperaturverhältnissen von bevorzugt -70 °C eine innere Aufweitung von bevorzugt 15 ° erfolgen.

Das erfindungsgemäße Steckelement ist nach unten bis zu einem Außendurchmesser von bevorzugt 8 mm herstellbar.

Das Steckelement kann im Außendurchmesser bevorzugt einen Wert bis 40 mm einnehmen, bei einer bevorzugten Wandstärke von 4 mm. Die Lagerung und die Verarbeitung des Steckelements aus Formgedächtnislegierung ist im stabilen Bereich zwischen bevorzugt 60 °C und -70 °C möglich, ohne dass das Steckelement wieder in seine erste Form zurückkehrt.

Der Draht wird vorzugsweise spiralförmig gewickelt, so dass ein Körperteil aus wenigstens einer Drahtwindung gebildet wird. Die Windung kann dabei einen runden Verlauf, einen ovalen Verlauf, einen elliptischen Verlauf oder einen mehreckigen Verlauf aufweisen.

Nach Erreichung der gewünschten Anzahl von Drahtwindungen wird der Draht abgelängt und zur Bildung einer Druckfeder auf Block zusammengedrückt. Beispielhaft und in keiner Weise ausschließlich wird im Weiteren von einem Körperteil eines Steckelementes ausgegangen, der zehn Drahtwindungen aufweist, die einen Werkstoff aus einer Formgedächtnislegierung aufweisen.

Die Ablängung des Steckelements aus Formgedächtnislegierung kann bevorzugt durch keramisches Schneiden erfolgen. Die Ablängung kann auch durch Wasserstrahlschneiden oder Laserschneidverfahren bewerkstelligt werden. In jedem Fall wird die Ablängung unter gleichzeitiger Kühlung des Werkstoffes vorgenommen.

Zur Ausbildung eines zylindrischen Federelements werden die nebeneinander angeordneten Federwindungen rundum miteinander verschweißt, so dass insbesondere eine radial nach außen hin glatte Oberfläche entsteht.

Die Drahtwindungen des jeweiligen Steckelements werden bevorzugt durch Laserschweißen miteinander verbunden. Es können jedoch zur Verbindung der Drahtwindungen miteinander auch andere Schweißverfahren oder andere technische Verbindungsmöglichkeiten Anwendung finden können.

Der Schweißvorgang erfolgt bevorzugt durch Laserschweißen. Die Verschweißung wird in der Regel ohne Zuführung eines Zusatzwerkstoffes ausgeführt. Die Laserstrahlung wird mittels einer Optik fokussiert. Der Brennfleck besitzt einen typischen Durchmesser von einigen zehntel mm, wodurch sehr hohe Energiekonzentrationen entstehen können.

Die Drahtwindungen können auch durch Lasertiefschweißen oder durch Laserstrahl-msg-hybrid-Schweißen miteinander verbunden werden. Auch die Verbindung der einzelnen Drahtwindungen miteinander wird unter gleichzeitiger Kühlung der Drahtwindungen vollzogen.

Darüber hinaus kann die Verschweißung der Windungen aus Formgedächtnislegierung auch mittels eines anderen Schweißverfahrens erfolgen.

Vor dem Verschweißen werden die Drahtwindungen auf Block zusammengepresst. Das Körperteil des Steckelements kann als Speicher für potentielle Energie dienen. Das Steckelement kann darüber hinaus einen Kraftschluss zwischen wenigstens zwei Bauteilen erzeugen.

Um mechanische Spannungen, die insbesondere bei der Kaltumformung des Drahtes im Werkstoff entstehen wieder zu normalisieren, wird das durch die Verschweißung der Drahtwindungen geschaffene Steckelement vorzugsweise geglüht.

Zur weiteren Veredelung und Bearbeitung der Oberfläche des Steckelements können verbliebene Grate und/oder Einkerbungen zwischen den miteinander verschweißten Drahtwindungen, bevorzugt durch Überdrehen der Drahtwindungen begradigt werden.

Aufgrund der nachträglichen Bearbeitung, insbesondere durch Überdrehung des Steckelements ist eine Fertigung ohne Nähte, Grate oder andere Unebenheiten erzielbar.

Es versteht sich von selbst, dass die vorstehenden Ausführungen nur beispielhaft und in keiner Weise ausschließlich gemeint sind. selbstverständlich können die miteinander verschweißten Drahtwindungen auf jede andere erforderliche Art und Weise bearbeitet, versiegelt und veredelt werden.

Das Steckelement mit seiner Formgedächtnislegierung wird dann auf eine niedrigere Temperatur abgekühlt, in der die Formgedächtnislegierung des Drahtes in die Martensitphase übergeht.

Es ist vorstellbar, dass das Steckelement nach der Abkühlung aufgeweitet wird und bei erneuter Erwärmung teilweise in seine ursprüngliche Form zurückschrumpft.

Das Steckelement in Form der wenigstens einen Drahtwindung aus Formgedächtnislegierung ist in der Weise abkühlbar, dass der Draht in Form und Umfang mechanisch bearbeitet werden kann. Die Windung des Steckelements kann expandiert bzw. aufgeweitet werden. Es ist jedoch auch möglich, die Drahtwindung des Steckelements auf einen geringeren Durchmesser zu schrumpfen.

Die Drahtwindung wird in eine gewünschte geometrische Form gebracht. Hierbei können sowohl der Umfang und die Form des Drahtes als auch die Form und der Umfang der Drahtwindung bearbeitet werden. Die Drahtwindungen können dabei in Bezug auf ihren Durchmesser aufgeweitet oder geschrumpft werden.Mit einer anschließenden Erwärmung des Steckelements in der Martensitphase der Formgedächtnislegierung ist die Windung in eine zweite Form überführbar.

Die Drahtwindungen können je nach Einsatzbereich und Erfordernis in Bezug auf den Dämpfungsfaktor oder Dämpfungswert voneinander abweichen.

Die beiden Formen können dem Steckelement durch Zusammensetzung des Werkstoffes aus Formgedächtnislegierung und/oder durch die Temperaturbehandlung vorgegeben werden.

Bei einem Einwegeffekt wird das Steckelement mit seiner Formgedächtnislegierung scheinbar plastisch verformt. Durch die Erwärmung des Steckelements in der martensitischen Phase ist das Steckelement bei Überschreiten einer kritischen Temperatur in eine zweite Form überführbar.

Bei einem Zweiwegeeffekt weist die Formgedächtnislegierung des Steckelements eine erste definierte Form und eine zweite definierte Form auf.

Die Wandlung des Steckelements von der ersten Form in die zweite Form erfolgt durch Erwärmung oder Abkühlung der Formgedächtnislegierung.

Liegt der Zweiwegeeffekt vor, so können die jeweiligen Formen erst nach Unterschreiten bzw. nach Überschreiten einer jeweiligen Grenztemperatur erreicht werden.

Bevorzugt im Bereich der Luftfahrtindustrie ist der formstabile Bereich ein Bereich zwischen +60 °C und -60 °C. Über einem Wert von + 60°C und unter -60 °C ist die Formgedächtnislegierung des Werkstoffs des Steckelements instabil und kann aufgeweitet bzw. geschrumpft werden.

Beim Einwegeffekt wird das Steckelement in der martensitischen Phase bevorzugt anstatt durch Belastung durch Beheizung von einer Form in die andere Form überführt.

Im Beispiel einer Pseudoelastizität verfügt die Formgedächtnislegierung über die Eigenschaft, irreversible Verformungen von etwa 8 bis 10 Prozent vollziehen zu können. Bei der Pseudoelastizität findet die kinetische Phasenumwandlung durch eine äußere mechanische Spannung statt. Bei nachlassender Spannung gelangt die Formgedächtnislegierung wieder in eine austenitsche Phase. Mit Hilfe der Pseudoelastizität ist eine starke elastische Verformung auch ohne Temperaturänderung möglich.

Das Steckelement hat eine Wandstärke bevorzugt zwischen 2 mm und 15 mm. Eine solche Wandstärke ermöglicht eine ausreichende Zugfestigkeit und eine zufrieden stellende Haltekraft des Steckelements gegenüber dem Trägerteil.

Das Steckelement weist wenigstens ein Körperteil, bevorzugt zwei oder drei Körperteile auf. Die Körperteile können bevorzugt unter Verwendung zusätzlicher Dichtelemente auf die Trägerteile gesteckt werden. Die Formgedächtnislegierung des Steckelements ermöglicht einen festen Klemmsitz des Körperteils auf dem Trägerteil.

Der Klemmsitzt wird bewirkt, indem das Körperteil des Steckelements nach einer Kaltumformung des Außenumfangs in seine erste Form abgekühlt wird. Im abgekühlten Zustand wird das Steckelement mit seinem Körperteil aufgeweitet oder geschrumpft (zweite Form). Mit einer erneuten Erwärmung wird das Steckelement zumindest annähernd wieder in die erste Form überführt.

Das erfindungsgemäße Steckelement kann eine Hülse, ein Rohr oder ein anderes Hohlprofil mit entsprechender geometrischer Form sein, die/das auf ein Ende eines Trägerteils aufsteckbar ist. Ein zweites Trägerteil wird gegenläufig zum ersten Trägerteil in das Körperteil des Steckelements eingeführt, so dass die beiden Trägerteile immer mit Spiel aneinander liegen oder stirnseitig über einen Teflonring von einander getrennt sind. Anstatt Teflon kann zur Herstellung des Trennrings auch wenigstens ein anderer vergleichsweise weicher Werkstoff, vorzugsweise ein Metall verwendet werden.

Es ist auch vorstellbar, dass das Steckelement mit dem einem Körperteil in das offene Ende eines Trägerteils eingreift und mit dem anderen Körperteil in ein zweites Trägerteil hineinragt.

Die Trägerteile, die in die Körperteile des Steckelements eingreifen, stoßen immer mit Spiel aneinander an. Weiter ist es denkbar, dass die Trägerteile über einen Teflonring von einander getrennt sind. Anstatt Teflon kann an dieser Stelle zur Herstellung des Trennrings wenigstens ein anderer vergleichsweise weicher Werkstoff, vorzugsweise ein Metall verwendet werden.

Zusätzlich ist es denkbar, dass das Steckelement mit einem Körperteil in das offene Ende eines Trägerteils eingreift und mit einem zweiten Körperteil auf das offene Ende eines weiteren Trägerteils aufgesteckt ist.

Je nachdem, ob das Körperteil des Steckelements in das Trägerteil hineingesteckt ist oder auf das Trägerteil aufgesteckt ist, erfolgt eine Verbindung des Steckelements mit dem jeweiligen Trägerteil , in dem die Formgedächtnislegierung des jeweiligen Körperteils des Steckelements zum Übergang hin auf seine erste Form zurückschrumpft oder sich ausdehnt.

Die Innendurchmesser des Körperteils der Steckelements ist aufgrund der Schrumpffähigkeit oder der Expandierfähigkeit der Formgedächtnislegierung an Trägerteile unterschiedlichen Außendurchmessers anpassbar.

Ein Anschrumpfen oder ein Aufweiten des Steckelements an das Trägerteil bewirkt eine fluiddichte Abdichtung des Steckelements gegenüber dem jeweiligen Trägerteil.

Die Körperteile des Steckelements können Bereiche unterschiedlichen Durchmessers aufweisen oder sich in Bezug auf ihren Durchmesser vom Durchmesser anderer Körperteile unterscheiden.

Das Steckelement kann unterschiedliche Federkonstanten, Federhärten oder Federkennlinien aufweisen. Das Steckelement kann darüber hinaus unterschiedliche Wirkungsgrade aufweisen. Unter dem Begriff Wirkungsgrad ist in diesem Zusammenhang das Maß für die Effizienz für die Energiewandlung und Energieübertragung zu verstehen.

Nach einer anderen Ausführungsform der Erfindung ist eine einmalige Formänderung der auf Block gepressten Drahtwindungen aus einer Formgedächtnislegierung erzielbar, die zuvor im martensitischen Zustand aufgeweitet oder gestaucht worden ist.

Eine Abkühlung des Steckelements mit seinem wenigstens einen Körperteil aus Formgedächtnislegierung bewirkt keine weitere Formänderung, sondern eine intrinsische Gitteränderung.

Die Formgedächtnislegierung (shape-memory-alloy) zur Fertigung des wenigstens einen Körperteils umfasst beispielhaft und nicht ausschließlich die Elemente Nickel und Titan und/oder Niob und/oder Zirkonium. Als weitere Materialien können Kupfer, Zink, Aluminium, Gold, Kadmium und weitere Legierungen, wie z. B. Eisen, Mangan, Silizium verwendet werden.

Die vorausgegangene Aufzählung ist rein beispielhafter Natur. Es können jedoch auch andere nicht genannte Elemente eingesetzt werden.

Zur Verbesserung der Verbindung zwischen dem Körperteil des Steckelements und dem wenigstens einem Trägerteil ist an dem Innenumfang und/oder dem Außenumfang des Körperteils des Steckelements, der dem Trägerteil zugewandt ist, eine Strukturierung vorgesehen.

Die Strukturierung kann jede Art von geometrischen Profilen umfassen, bevorzugt eine Zahnung oder andere Profilierungen.

Eine weitere Ausführungsform der Erfindung sieht vor, dass der am Trägerteil anliegende Bereich des Körperteils des Steckelements voneinander abweichende Innendurchmesser aufweist. Die Körperteile des Steckelements weisen rein beispielhaft Durchmesser von 4 mm bis 30 mm auf, wobei Wandstärken von 2 mm bis 10 mm Verwendung finden können.

Bevorzugt werden Innendurchmesser von 4 mm bis 30 mm und Wandstärken von 1 mm bis 10 mm eingesetzt.

Geht man davon aus, dass ein Steckelement wenigstens zwei Körperteile aus Formgedächtnislegierung, bevorzugt drei oder mehr Körperteile aus einer Formgedächtnislegierung aufweist, so können die Körperteile des Steckelements in einer gemeinsamen Ebene verlaufen. Darüber hinaus ist es auch vorstellbar, dass sich wenigstens zwei Körperteile eines Steckelements in einem Winkel zueinander, bevorzugt in einem rechten Winkel zueinander erstrecken.

In diesem Zusammenhang werden ein oder mehrere Steckelemente über ihre Körperteile mit einem Trägerteil verbunden.

Es ist auch vorstellbar, dass Steckelemente zum Verschließen eines Körperteils eingesetzt werden, wenn dieses Körperteil nicht zum Anschluss an ein Trägerteil vorgesehen ist.

Erfindungsgemäß ist ein Reparaturset vorgesehen, das wenigstens ein Steckelement mit wenigstens einem Körperteil aufweist, das als Werkstoff eine Formgedächtnislegierung (shape-memory-alloy) umfasst. Das Körperteil des Steckelements ist mit wenigstens einem Trägerteil derart verbindbar, dass das Körperteil zumindest bereichsweise mit seinem Umfang radial am Trägerteil anliegt. Das Körperteil weist vorzugsweise wenigstens eine Windung eines Drahtes auf, der als Werkstoff die Formgedächtnislegierung umfasst. Die Formgedächtnislegierung des Körperteils ist bei Temperaturänderung dehnbar, wobei die geometrische Form der wenigstens einen Drahtwindung von einer ersten Form in eine weitere Form überführbar ist. Das Reparaturset kann ein Trägergehäuse umfassen, in das das Steckelement zu Transport-und/oder Lagerzwecken einlegbar ist.

Das Trägergehäuse kann zum Schutz des Steckelements vor Beschädigungen mit einem Schutzstoff ausgekleidet sein. Der Schutzstoff kann z.B. Teflon oder eine PTFE-Beschichtung sein. Die vorstehend genannten Werkstoffe sind jedoch nur beispielhaft und in keiner Weise ausschließlich gemeint. Es können darüber hinaus einzeln oder in Kombination miteinander andere Werkstoffe zum Einsatz kommen.

Zum Einsatz wird das wenigstens eine Steckelement aus dem Trägergehäuse herausgenommen und mit dem oder den Trägerteil/en verbunden.

Je nach dem, ob sich das Steckelement in die erste Form ausdehnt oder komprimiert, erfolgt eine Abdichtung des Steckelements an den Innenumfang des Trägerteils oder an dem Außenumfang des Trägerteils.

Die vorliegende Erfindung sieht darüber hinaus ein Verfahren zur Herstellung eines Steckelements vor, das wenigstens ein auf einer Formgedächtnislegierung (shape-memory-alloy) basierendes Körperteil umfasst.

Die Lagerung des Steckelements erfolgt bevorzugt bei Raumtemperatur.

Im Bereich der Luftfahrtindustrie ist der formstabile Bereich ein Bereich bevorzugt zwischen plus 50 Grad Celsius und minus 60 Grad Celsius. In diesem Bereich ist die Formgedächtnislegierung instabil und kann bevorzugt aufgeweitet oder geschrumpft werden.

Die benötigte Kaltumformung des Außendurchmessers des Steckelements kann im Wege der Halbzeugfertigung in roher Form erreicht werden.

Gleichzeitig kann unter martenitsichen Temperaturverhältnissen von bevorzugt minus 70 Grad Celsius eine innere Aufweitung von bevorzugt 15 % erfolgen.

Das erfindungsgemäße Steckelement ist nach unten auch bis zu einem Durchmesser von bevorzugt 6 mm herstellbar.

Der Durchmesser des Steckelements nach der vorliegenden Erfindung kann nach außen bevorzugt einen Wert bis 30 mm einnehmen, bei einer Wandstärke von bevorzugt 4 mm.

Eine Lagerung und eine Verarbeitung des Werkstoffs aus Formgedächtnislegierung des Steckelements ist im stabilen Bereich zwischen bevorzugt plus 50 Grad Celsius und minus 70 Grad Celsius möglich, ohne dass sich das Steckelement mit einem Werkstoff aus einer Formgedächtnislegierung in seine ursprüngliche Form umwandelt.

Erfindungsgemäß ist das Körperteil mit einem Fluid befüllbar.

Das Fluid ist ein Kühlmittel oder ein Kältemittel und ist vor, während oder nach der Zuführung in das Körperteil auf eine vorbestimmte Temperatur abkühlbar. Das im Körperteil angeordnete Kühlmittel entzieht dem Werkstoff des Körperteils Wärme bzw. überträgt die dem Kühlmittel innewohnende Kälte auf den Werkstoff des Körperteils. Das Fluid ist je nach Anforderung flüssig, gelförmig oder gasförmig.

Zur Befüllung ist das Körperteil vorzugsweise jeweils an seinen Stirnseiten verschließbar, sodass das Fluid im Körperteil mit Druck beaufschlagt werden kann. Das Fluid wird nach der Befüllung des Körperteils mit dem Fluid oder vor der Befüllung mit Druck beaufschlagt.

Durch die Beaufschlagung des Fluids mit Druck weitet das Fluid im Inneren des Körperteils das Körperteil auf. Beispielhaft und in keiner Weise ausschließlich weist das Fluid im Körperteil einen Druck von 2.300 bar auf.

Das Körperteil deformiert dabei zu der ersten Form. Beim nachfolgenden Erwärmen des Körperteils ist das Körperteil in die zweite Form überführbar, in der das Körperteil radial und dicht am Trägerteil anliegt.

Weitere Beispiele und Ausführungen der Erfindung werden im Folgenden beispielhaft und unter Bezugnahme auf die beiliegenden Zeichnungen ausführlicher beschrieben. Hierbei zeigen:
Fig. 1 ein Steckelement 1 mit zwei Trägerteilen 2 und 3, wobei das Steckelement 1 in eine erste Form 4 aufgeweitet ist,
Fig. 2 eine Darstellung entsprechend Fig. 1 mit dem Unterschied, dass das Steckelement 1 in eine zweite Form 5 überführt ist und an den Trägerteilen 2; 3 anliegt,
Fig. 3 ein Steckelement 1, das in die Trägerteile 2; 3 eingeführt ist mit zusätzlichen Stopfen 6 und 7,
Fig. 4 eine vergleichbare Darstellung wie in Fig. 3, mit dem Unterschied, dass das Steckelement und die Stopfen 6 und 7 in ihre zweite Formen überführt sind,
Fig. 5 eine Darstellung entsprechend Fig. 1 mit Strukturelementen 8 und 9,
Fig. 6 ein Reparaturset 10 mit drei Steckelementen,
Fig. 7 ein Steckelement mit radial außenliegenden Dichtungskörpern,
Fig. 8 die noch nicht vorhandenen Windungen aus einem Draht aus Formgedächtnislegierung zur Herstellung eines Steckelements,
Fig. 9 ein Steckelement entsprechend der Fig. 8, mit dem Unterschied, dass die Windungen des Drahtes auf Block zusammengedrückt sind, und
Fig. 10 eine Weiterentwicklung der Erfindung.

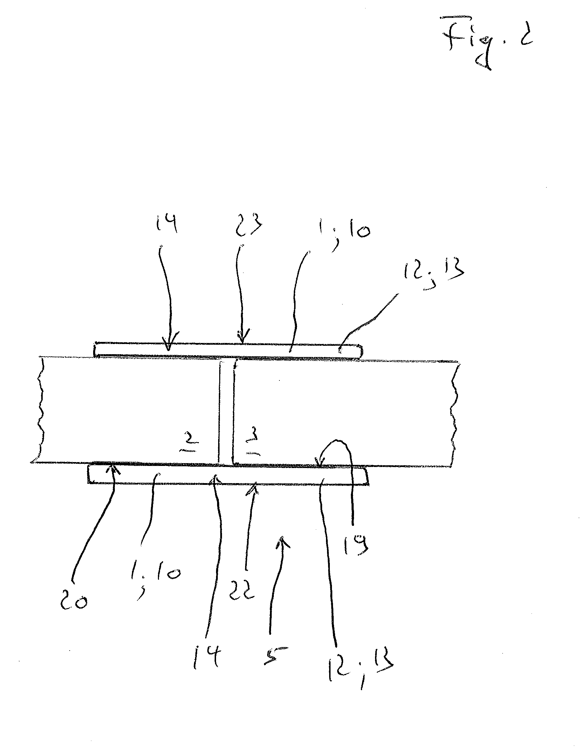

Beispielhaft und in keiner Weise ausschließlich wird im Folgenden davon ausgegangen, dass ein Steckelement 1 zur mechanischen Aufweitung oder Komprimierung in einer Martensitphase 15 abkühlbar ist und nach Aufwärmen in eine zweite Form 5 (Fig. 2) zurückkehrt.

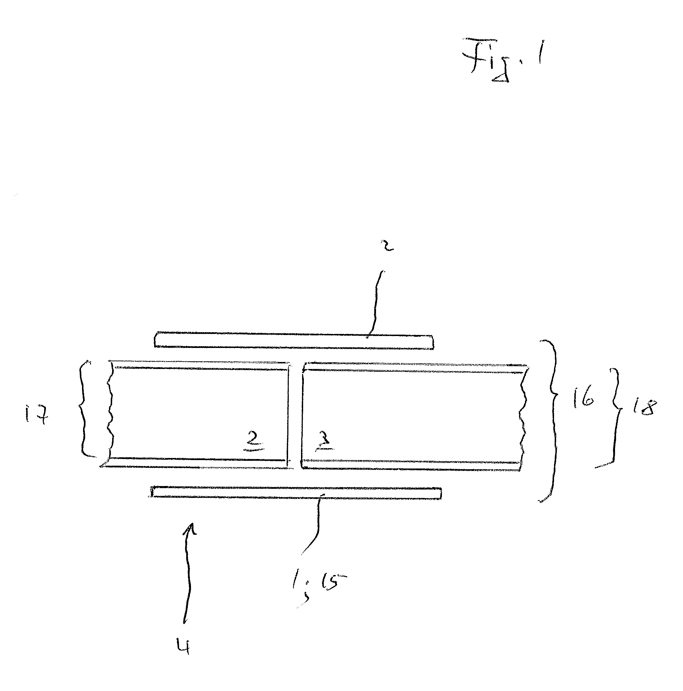

In Fig. 1 sind Trägerteile 2 und 3 in ein Steckelement 1 eingeführt.

Da sich das Steckelement in der Martensitphase 15 befindet und gegenüber der zweiten Form 5 (nicht gezeigt) aufgeweitet ist, weist das Steckelement 1 einen Durchmesser 16 auf, der größer ist als die Durchmesser 17; 18 der Trägerteile 2 und 3.

Die Trägerteile 2 und 3 können im verbauten Zustand vorzugsweise stirnseitig aneinander anstoßen.

Fig. 2 zeigt das Steckelement 1 nach Fig. 1 mit den beiden in das Steckelement 1 eingeführten Trägerteilen 2 und 3.

Das Steckelement 1 ist in Fig. 1 in seiner ersten Form 4 dargestellt und ist in Fig. 2 z.B. auf eine vorgegebene Temperatur erwärmt.

Mit der Erwärmung auf z.B. Zimmertemperatur wird das Steckelement 1 aus seiner ersten Form 4 (Fig. 1) in die zweite Form 5 (Fig. 2) überführt.

In seiner zweiten Form 5 liegt das Steckelement 1 mit seinem Innenumfang 19 am jeweiligen Außenumfang 20 der Trägerteile 2 und 3 dichtend an.

Das Steckelement 1 umfasst ein Körperteil 21, das aus einer Formgedächtnislegierung 14 gefertigt ist.

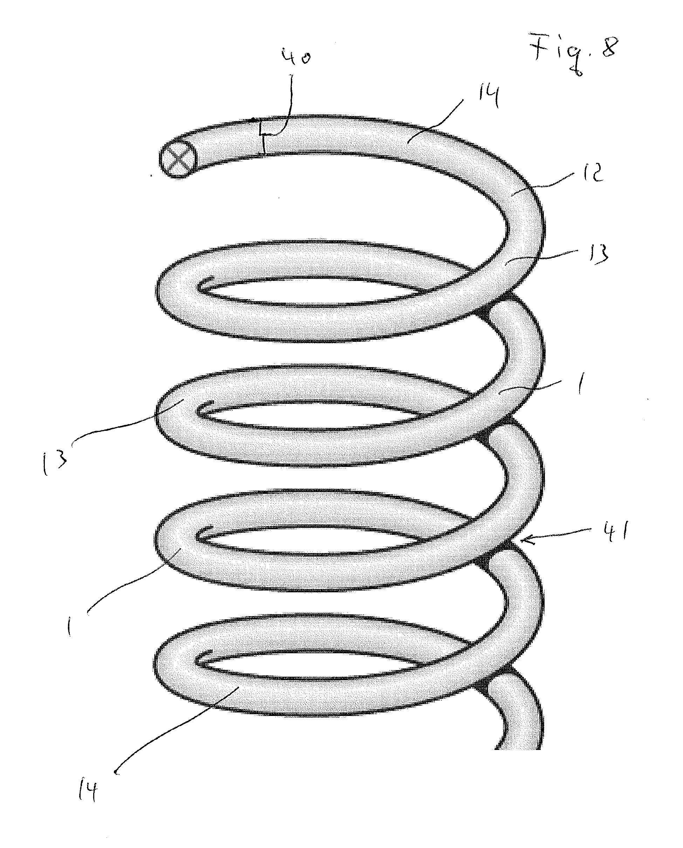

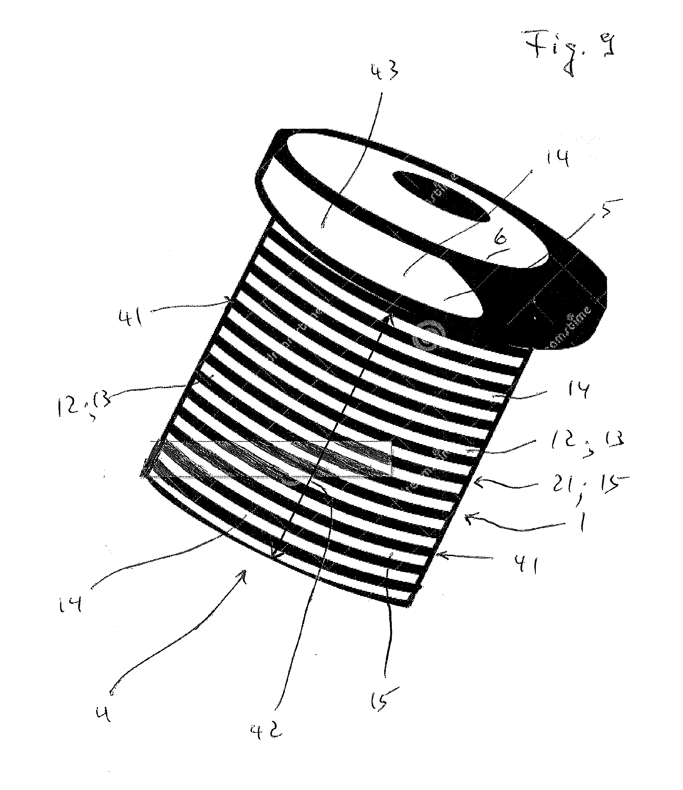

Die in den Fig. 1 bis 7 gezeigten Steckelemente 1 umfassen gemäß Fig. 8 Drahtwindungen 12; 13, die gemäß Fig. 9 am Außenumfang 22 des Steckelements 1 verschweißt und in eine glatte Oberfläche 23 überführt sind.

Das Steckelement 1 liegt mit seinem Innenumfang 19 dicht am jeweiligen Außenumfang 20 der Trägerteile 2; 3 an.

Die Trägerteile 2; 3 stoßen im Inneren des Steckelements 1 vorzugsweise stirnseitig aneinander an.

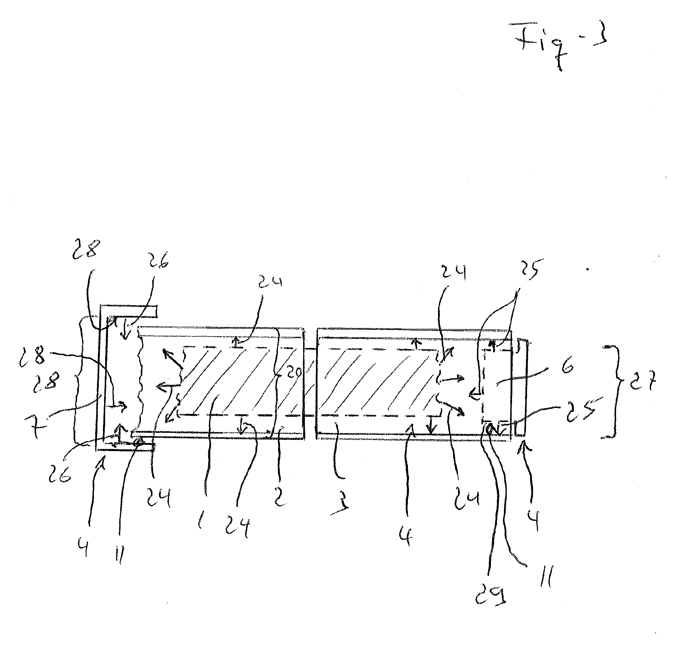

Fig. 3 zeigt zwei Trägerteile 2 und 3, die beispielhaft jeweils an gegenüberliegenden Enden Stopfen 6 und 7 aufweisen.

Im Gegensatz zu den Figuren 1 und 2 sind die beiden Trägerteile 2 und 3 über ein innenliegendes Steckelement 1 miteinander verbunden.

Das Steckelement 1 ist in einer ersten Form 4 dargestellt, die gegenüber der (nicht gezeigten) zweiten Form 5 geschrumpft ist.

Bei der Überführung des Steckelements 1 aus der ersten Form 4 in die zweite Form 5 dehnt sich das Steckelement 1 entsprechend den Pfeilen 24 radial nach außen aus.

Die Stopfen 6 und 7 sind ebenfalls in ihren Zustand in einer ersten Form 4 dargestellt. Hierbei ist der Stopfen 7 gegenüber der (nicht gezeigten) zweiten Form 5 aufgeweitet, wogegen der innenliegende Stopfen 6 in der gezeigten ersten Form 4 gegenüber der zweiten Form 5 radial geschrumpft ist.

Zur Überführung der Stopfen 6 und 7 aus der ersten Form 4 in die zweite Form 5 erfolgt eine Ausdehnung des Stopfens 6 entsprechend dem Pfeil 25.

Eine Schrumpfung des Stopfens 7 aus der ersten Form 4 in die zweite Form 5 (nicht gezeigt) erfolgt entsprechend den Pfeilen 26.

Der Innenumfang 19 des Stopfens 7 legt sich mit Überführung in die zweite Form 5 an den Außenumfang 20 des Trägerteils 2 an.

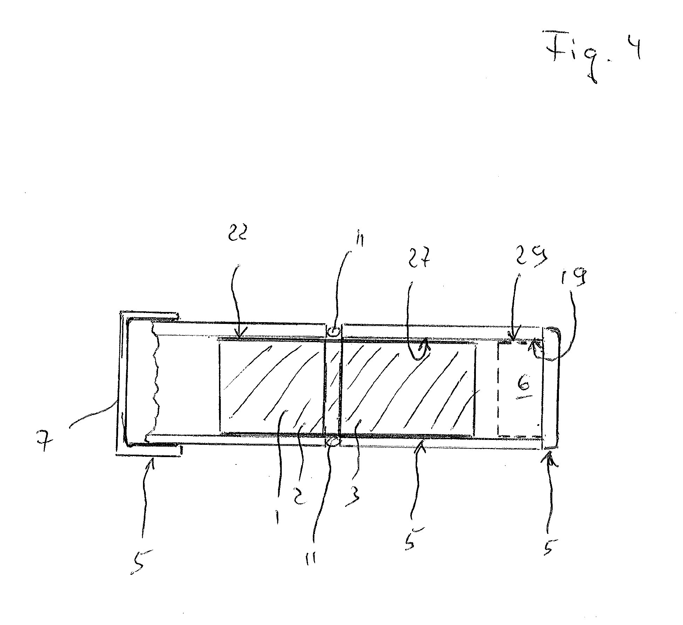

Mit der Aufweitung des Steckelements 1 sowie des Stopfens 6 bei der Überführung in die zweite Form 5 (vgl. Fig. 4) dehnen sich das Steckelement 1 sowie der Stopfen 6 entsprechend den Pfeilen 24 und 25 aus.

Mit der erfolgten Ausdehnung bzw. Schrumpfung des Steckelements 1, des Stopfens 6 bzw. des Stopfens 7 ergibt sich eine dichte Verbindung zwischen den Trägerteilen 2 und 3 und dem Steckelement 1 bzw. zwischen den Trägerteilen 2 und 3 und den Stopfen 6 und 7.

Zur Verdeutlichung des Verlaufs des Steckelements 1 im Inneren der Trägerteile 2 und 3 sind die beiden Trägerteile 2 und 3 stirnseitig voneinander beabstandet dargestellt. Im verbauten Zustand stoßen die beiden Trägerteile 2 und 3 jedoch vorzugsweise stirnseitig aneinander an.

Ergänzend kann ein Dichtungskörper 11 zwischen den beiden Stirnseiten der Trägerteile 2 und 3 vorgesehen sein.

Weitere Dichtungskörper 11 können zwischen den jeweiligen Anlageflächen der Trägerteile 2 und 3 und dem Steckelement 1 am Innenumfang 19 des Steckelements 1 oder an seinem Außenumfang 20 vorgesehen sein.

Es ist auch denkbar, Dichtungskörper 11 am jeweiligen Außenumfang 20 bzw. am Innenumfang 27 der Trägerteile 2 bzw. 3 anzuordnen.

Weitere Dichtungskörper 11 können am Innenumfang 28 bzw. Außenumfang 29 der Stopfen 6 bzw. 7 angeordnet sein, je nachdem, ob der Stopfen 6 bzw. 7 in den Innenumfang 27 des jeweiligen Trägerteils 2; 3 eingreift oder aber am Außenumfang 20 der Trägerteile 2; 3 ansetzt.

Fig. 4 zeigt eine Darstellung entsprechend Fig. 3 mit dem Unterschied, dass das Steckelement 1 aus der ersten Form 4 (Fig. 3) in die zweite Form 5 überführt ist und in dieser mit seinem Außenumfang 22 dicht am Innenumfang 27 des jeweiligen Trägerteils 2; 3 anliegt.

In der Darstellung der Fig. 4 hat sich das Steckelement 1 entsprechend den Pfeilen 24 (Fig. 3) radial und gegebenenfalls axial ausgedehnt.

Mit Überführung aus der ersten Form 4 (Fig. 3) in die zweite Form 5 (Fig. 4) expandiert der Stopfen 6 entsprechend dem Pfeil 5.

In gleicher Weise schrumpft der Stopfen 7 aus seiner ersten Form 4 (Fig. 3) in die zweite Form 5, in der der Stopfen 7 in Fig. 4 dargestellt ist.

Die Expansion (Stopfen 6 und Steckelement 1) sowie die Schrumpfung des Stopfens 7 von der ersten Form 4 in die zweite Form 5 bewirkt eine dichte Anlage der Außenumpfänge 22 (Steckelement 1) und 29 (Stopfen 6) gegenüber dem jeweiligen Innenumfang 27 der Trägerteile 2 und 3.

Die Ausführungen der Fig. 3 zu den Dichtungskörpern 11 gilt in gleicher Weise in Fig. 4.

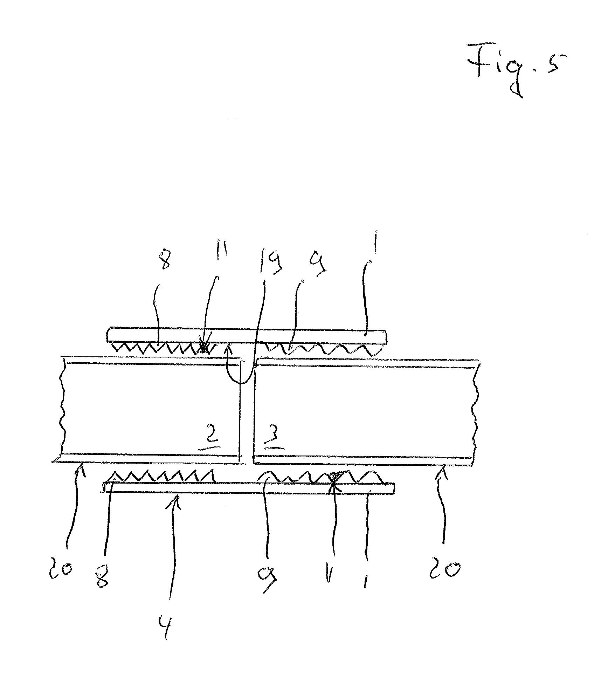

Fig. 5 entspricht der Darstellung der Fig. 1, mit dem Unterschied, dass am Innenumfang des Steckelements 1 Strukturelemente 8 und 9 vorgesehen sind, die die Druckverteilung zwischen dem Steckelement 1 und den Trägerteilen 2 und 3 individuell bestimmen.

Die Stukturelemente können vorzugsweise gezahnt sein (Strukturelement 8) oder eine abgerundete Strukturierung aufweisen (Strukturelement 9).

Die Strukturelemente 8; 9 können bevorzugt aus Metall gefertigt sein und einstückig mit dem Steckelement 1 verbunden sein.

Zur besseren Verbindung zwischen dem Steckelement 1 und dem jeweiligen Trägerteil 2; 3 ist das Strukturelement 8; 9 bevorzugt aus einem Metall gefertigt, dass bevorzugt weicher ist, als der Werkstoff des Steckelements 1.

Die Strukturelemente 8; 9 weisen gleichmäßige und/oder ungleichmäßige Vertiefungen auf, die zusätzlich mit Dichtungskörpern 11 aufgefüllt sind.

Das Steckelement 1 ist in Fig. 5 in seiner ersten Form 4 dargestellt, die gegenüber den Trägerteilen 2 und 3 aufgeweitet ist.

Mit einer folgenden Erwärmung schrumpft das Steckelement 1 auf den Außenumfang 20 des jeweiligen Trägerteils 2; 3 zusammen.

Bei der Schrumpfung werden die Strukturelemente 8; 9 zusammengedrückt und verstärken den Halt und die Dichtung des Steckelements 1 gegenüber den Trägerteilen 2 und 3.

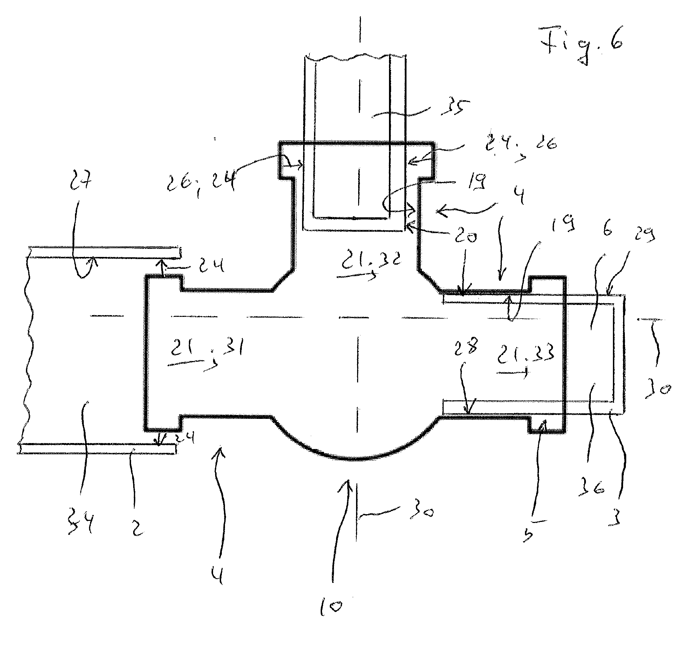

Fig. 6 zeigt ein Reparaturset 10 mit drei Körperteilen 31; 32; 33, die sich in einer gemeinsamen Ebene 30 erstrecken.

An den Körperteilen 31, 32 und 33 des Reparatursets 10 sind Trägerteile 34 und 35 bzw. ein Stopfen 36 dargestellt.

An den Körperteilen 31 und 32 ist je ein Trägerteil 34 und ein Trägerteil 35 angeordnet. Die beiden Körperteile 31 und 32 des Steckelements 1 des Reparatursets 10 sind jeweils in ihrer ersten Form geschrumpft (Körperteil 31) und aufgeweitet (Körperteil 32) dargestellt.

Bei der Überführung der Körperteile 31 und 32 von der ersten Form 4 in die (nicht dargestellte) zweite Form 5 weitet sich das Körperteil 31 bei Erwärmung entsprechend der Pfeile 24 auf und kommt in der zweiten Form 5 am Innenumfang 27 des Trägerteils 2 zur Anlage.

Das Körperteil 32 ist in seiner ersten Form 4 auf das Trägerteil 35 aufgesteckt.

In der Darstellung der Fig. 6 ist das Körperteil 32 in seiner ersten Form 4 gegenüber dem Trägerteil 35 um die Pfeile 24 aufgeweitet.

Mit Erwärmung aus der martensitischen Phase 15 schrumpft das Körperteil 32 gegen die Pfeile 26 zusammen und kommt in der nicht dargestellten zweiten Form 5 mit seinem Innenumfang 19 an dem Außenumfang 20 des Trägerteils 35 zur Anlage.

Das Körperteil 33 des Steckelements 1 des Reparatursets 10 ist mit einem Stopfen 6 verschlossen.

In Fig. 6 ist der Stopfen 6 in seiner zweiten Form 5 dargestellt.

In seiner in Fig. 6 dargestellten zweiten Form 5 liegt der Stopfen 6 mit seinem Außenumfang 29 am Innenumfang 19 des Körperteils 33 an.

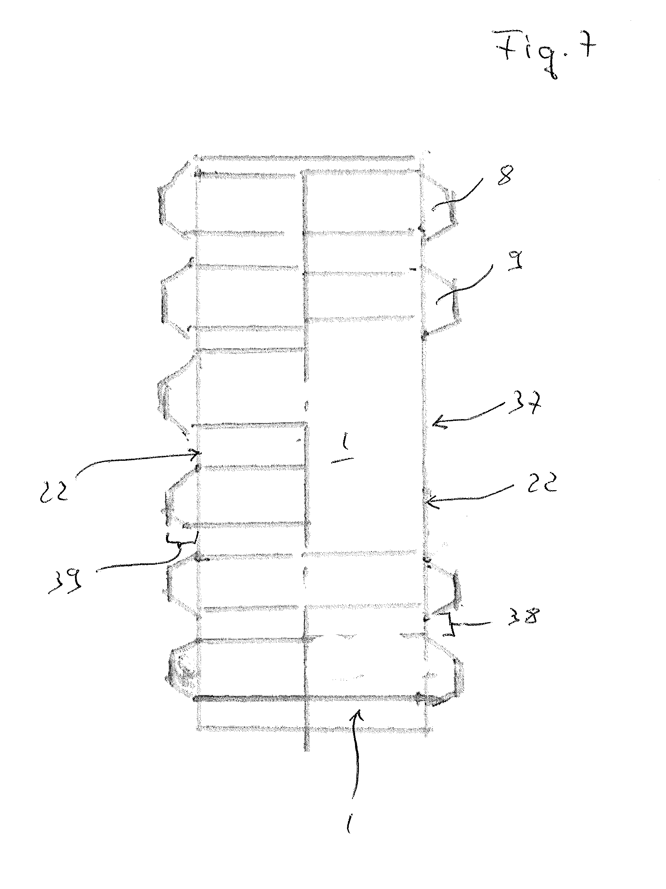

Fig. 7 zeigt ein Steckelement 1 mit Strukturelementen 8; 9, die vom Außenumfang 22 des Steckelements 1 radial nach außen abragen.

Um einen Bereich 37 des Steckelements im zusammengebauten Zustand in einem (nicht dargestellten) Trägerteils 2; 3 entlasten zu können, sind die Strukturelemente 8; 9 im Bereich 37 des Steckelements 1 weggelassen.

Die Strukturelemente 8; 9 sind in axialer Richtung des Steckelements 1 in einem Abstand 38 voneinander entfernt angeordnet.

Radial zur Längsachse des Steckelements 1 sind die Strukturelemente 8; 9 in einem Abstand 39 zum Außenumfang 22 des Steckelements 1 abgeflacht.

Fig. 8 zeigt einen Draht 13 aus einer Formgedächtnislegierung 14 mit seinen Windungen 12.

Fig. 8 zeigt die Windungen 12 des Steckelements 1 vor dem Verschweißen miteinander, so dass die Windungen 12 des Drahtes 13 aus Formgedächtnislegierung 14 noch voneinander beabstandet sind.

Die Windungen 12 des Drahtes 13 weisen einen Durchmesser 40 auf.

Die in Fig. 8 dargestellten Windungen haben einen schraubenförmigen oder kreisförmigen Verlauf und weisen nach gegenseitigem Verschweißen miteinander zu einem Steckelement 1 zwischen den einzelnen Windungen 12 Rillen 41 auf, die während der nachfolgenden Bearbeitung eingeebnet werden.

In Fig. 9 ist ein Steckelement 1 gezeigt, bei dem die Windungen 12 des Drahtes 13 aus einer Formgedächtnislegierung miteinander verschweißt sind. Die Rillen 41 (Fig. 8) sind in der Darstellung der Fig. 9 eingeebnet.

Die miteinander verschweißten Drahtwindungen 12; 13 aus einer Formgedächtnislegierung 14 sind nach dem gegenseitigen Verschweißen und nach ein Einebnen der Rillen 41 zu dem Steckelement 1 auf Block 42 zusammengepresst.

Das Steckelement 1 mit seinem Körperteil 21 ist in der Darstellung der Fig. 9 in der martensitischen Phase 15 dargestellt und dabei auf eine erste Form 4 geschrumpft.

Das Steckelement 1 kann nun in ein nicht dargestelltes Trägerteil 2 eingesteckt werden und durch Aufwärmen in seine (nicht dargestellte) ursprüngliche Form 5 aufgeweitet werden.

Stirnseitig am Körperteil 21 des Steckelements 1 ist einen äußerer Rand 43 eines Stopfens 6 dargestellt.

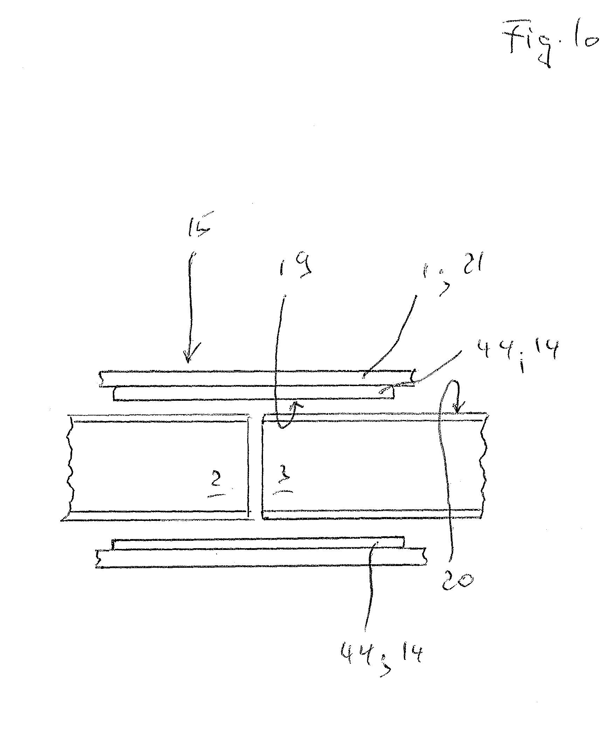

Fig. 10 zeigt im Wesentlichen eine Darstellung wie in Fig. 1 mit dem Unterschied, dass das Steckelement 1 wenigstens ein Körperteil 21 eines Steckelements 1 aufweist, das in der martensitischen Phase 15 aufgeweitet ist und das in die Trägerteile 2 und 3 eingeführt ist.

Auf der den Trägerteilen 2; 3 zugewandten Innenseite des Körperteils 21 weist das Steckelement 1 einen Einsatz, bevorzugt einen Inliner 44 auf. Der Inliner kann aus einer Formgedächtnislegierung 14 gefertigt sein oder aus einem vorzugsweise weichen Metall, um der Aufweitung bzw. der Schrumpfung des Körperteils 21 folgen zu können.

Das Steckelement 1 und der Inliner 44 sind kraftschlüssig und/oder stoffschlüssig miteinander verbunden.

Wird der Inliner 44 zusammen mit dem Steckelement 1 aufgewärmt, so schrumpft er auf seine (nicht dargestellte) zweite Form zurück und folgt bei dieser Schrumpfbewegung dem radial außen anliegenden Steckelement 1. Das in Fig. 10 dargestellte Steckelement 1 und/oder der Inliner 44 können einen Werkstoff aus Formgedächtnislegierung 14 umfassen.

### Bezugsziffern

1. Steckelement
2. Trägerteil
3. Trägerteil
4. erste Form
5. zweite Form
6. Stopfen
7. Stopfen
8. Strukturelement
9. Strukturelement
10. Reparaturset
11. Dichtungskörper
12. Windung
13. Draht
14. Formgedächtnislegierung
15. Martensitphase
16. Querschnitt
17. Querschnitt
18. Querschnitt
19. Innenumfang des Steckelements
20. Außenumfang des Trägerteils
21. Körperteil
22. Außenumfang Steckelement
23. glatte Oberfläche Steckelement
24. Pfeil
25. Pfeil
26. Pfeil
27. Innenumfang des Trägerteils
28. Innenumfang des Stopfens
29. Außenumfang des Stopfens
30.Ebene
31. Körperteil
32. Körperteil
33. Körperteil
34. Trägerteil
35. Trägerteil
36. Stopfen
37. Bereich
39. axialer Abstand
39. größter Abstand radial
40. Durchmesser des Drahts
41. Rillen
42. Block
43. äußerer Rand des Stopfens
44. Inliner/Einsatz

## Patentansprüche

1. Steckelement, mit wenigstens einem Körperteil (21; 31; 32; 33), das als Werkstoff eine Formgedächtnislegierung (14) (shape-memory-alloy) umfasst und mit wenigstens einem Trägerteil (2; 3) derart verbindbar ist, dass das Körperteil (21; 31; 32; 33) zumindest bereichsweise mit seinem Umfang radial am Trägerteil (2; 3) anliegt, **dadurch gekennzeichnet, dass** das Körperteil (21; 31; 32; 33) abkühlbar und zu einer ersten Form derart mechanisch deformierbar ist, dass es beim nachfolgenden Erwärmen in eine zweite Form überführbar ist, in der das Körperteil (21; 31; 32; 33) radial fest und dicht am Trägerteil (2; 3) anliegt.

2. Steckelement nach Anspruch 1, **dadurch gekennzeichnet, dass** das Körperteil (21; 31; 32; 33) die Form einer Hülse aufweist, die beim Abkühlen unter Vergrößerung ihres Innendurchmessers zu der ersten Form mechanisch derart aufweitbar ist, dass sie auf wenigstens ein zylindrisches Trägerteil (2; 3) aufsteckbar ist, und dass sie beim nachfolgenden Erwärmen die zweite Form annimmt, in der ihr verkleinerter Innenumfang am Außenumfang des wenigstens einen Trägerteiles (2;3) radial fest und dicht anliegt oder die beim Abkühlen unter Verringerung ihres Innendurchmessers zu der ersten Form mechanisch derart schrumpfbar ist, dass sie in wenigstens ein zylindrisches Trägerteil (2; 3) einsteckbar ist, und dass sie beim nachfolgenden Erwärmen die zweite Form annimmt, in der ihr vergrößerter Außenumfang am Innenumfang des wenigstens einen Trägerteiles (2;3) radial fest und dicht anliegt.

3. Steckelement nach Anspruch 1, **dadurch gekennzeichnet, dass** das Körperteil (21; 31; 32; 33) wenigstens eine Windung (12) eines Drahtes (13) ist, die beim Abkühlen unter Vergrößerung ihres Innendurchmessers zu der ersten Form mechanisch derart aufweitbar ist, dass sie auf wenigstens ein zylindrisches Trägerteil (2; 3) aufsteckbar ist, und dass sie beim nachfolgenden Erwärmen die zweite Form annimmt, in der ihr verkleinerter Innenumfang am Außenumfang des wenigstens einen Trägerteiles (2; 3) radial fest und dicht anliegt oder die beim Abkühlen unter Verringerung ihres Innendurchmessers zu der ersten Form mechanisch derart schrumpfbar ist, dass sie in wenigstens ein zylindrisches Trägerteil (2; 3) einsteckbar ist, und dass sie beim nachfolgenden Erwärmen die zweite Form annimmt, in der ihr vergrößerter Außenumfang am Innenumfang des wenigstens einen Trägerteiles (2; 3) radial fest und dicht anliegt.

4. Steckelement nach einem oder mehreren der Ansprüche 1 bis 3, **dadurch gekennzeichnet, dass** das Körperteil (21; 31; 32; 33) vor dem Abkühlen durch Kaltumformung hergestellt ist.

5. Steckelement nach Anspruch 3, **dadurch gekennzeichnet, dass** das Körperteil (21; 31; 32; 33) zwei oder mehr Drahtwindungen (12; 13) aufweist, die miteinander verschweißt sind.

6. Steckelement nach einem oder mehreren der Ansprüche 3 bis 5, **dadurch gekennzeichnet, dass** das Körperteil (21; 31; 32; 33) zwei oder mehrere Drahtwindungen (12; 13) aufweist, die zu einer Feder gewickelt und/oder zu einem Block (42) zusammengedrückt sind.

7. Steckelement nach einem oder mehreren der vorausgehenden Ansprüche, **dadurch gekennzeichnet, dass** das Körperteil (21; 31; 32; 33) in der martensitischen Phase (15) mechanisch in die erste Form (4) aufgeweitet oder geschrumpft ist.

8. Steckelement nach Anspruch 7, **dadurch gekennzeichnet, dass** das Körperteil (21; 31; 32; 33) durch Aufwärmen in der martensitischen Phase (15) aus der ersten Form (4) in die weitere Form (5) geschrumpft und/oder aufgeweitet ist.

9. Steckelement nach einem oder mehreren der vorausgehenden Ansprüche, **dadurch gekennzeichnet, dass** zwischen dem Körperteil (21; 31; 32, 33) und wenigstens einem Trägerteil (2; 3) wenigsten ein axialer und/oder ein radialer Dichtungskörper (11) angeordnet sind/ist.

10. Steckelement nach einem oder mehreren der vorausgehenden Ansprüche, **dadurch gekennzeichnet, dass** die erste Form (4) und/oder die weitere Form (5) eine definierte Form sind/ist.

11. Steckelement nach einem oder mehreren der vorausgehenden Ansprüche, **dadurch gekennzeichnet, dass** die Formgedächtnislegierung (14) Nickel und Titan und Niob und/oder Zirkonium umfasst.

12. Steckelement nach einem oder mehreren der vorausgehenden Ansprüche, **dadurch gekennzeichnet, dass** wenigstens ein am Trägerteil (2; 3) anliegender Bereich (37) des Körperteils (21; 31; 32; 33) strukturiert ist, vorzugsweise die Form einer Zahnung oder die Form von Noppen aufweist.

13. Steckelement nach Anspruch 12, **dadurch gekennzeichnet, dass** die am Trägerteil (2; 3) anliegenden Bereiche (37) der Körperteile (21; 31; 32; 33) voneinander abweichende Innendurchmesser (16) oder Aussendurchmesser (22) aufweisen.

14. Steckelement nach einem oder mehreren der vorausgehenden Ansprüche, **dadurch gekennzeichnet, dass** das Steckelement (1) ein zumindest nach einer Stirnseite offenes vorzugsweise kreiszylinderförmiges Hohlprofil ist.

15. Steckelement nach einem oder mehreren der vorausgehenden Ansprüche 1. bis 14., **dadurch gekennzeichnet, dass** das Steckelement (1) ein zumindest nach einer Stirnseite geschlossenes Hohlprofil ist.

16. Steckelement nach einem oder mehreren der vorausgehenden Ansprüche, **dadurch gekennzeichnet, dass** das Körperteil (21; 31; 32; 33) des Steckelements (1) eine flächige Wandung aufweist.

17. Steckelement nach einem oder mehreren der vorausgehenden Ansprüche, **dadurch gekennzeichnet, dass** das Körperteil (21; 31; 32; 33) des Steckelements (1) eine Gitterstruktur aufweist.

18. Reparaturset zur Herstellung von Steckelementen (1), nach einem oder mehreren der vorausgehenden Ansprüche 1 bis 17, **dadurch gekennzeichnet, dass** das Steckelement (1; 34; 35) wenigstens zwei Körperteile (21; 31; 32; 33) umfasst, deren Innendurchmesser (16) voneinander abweichen.

19. Steckelement, mit wenigstens einem Körperteil (21; 31; 32; 33), das als Werkstoff eine Formgedächtnislegierung (14) (shape-memory-alloy) umfasst und mit wenigstens einem Trägerteil (2; 3) derart verbindbar ist, dass das Körperteil (21; 31; 32; 33) zumindest bereichsweise mit seinem Umfang radial am Trägerteil (2; 3) anliegt, **dadurch gekennzeichnet, dass** das Körperteil (21; 31; 32; 33) mit einem Fluid befüllbar ist und durch das zugeführte Fluid abkühlbar und zu der ersten Form deformierbar ist, so dass das Körperteil (21; 31; 32; 33) beim nachfolgenden Erwärmen in eine zweite Form überführbar ist, in der das Körperteil (21; 31; 32; 33) radial und dicht am Trägerteil (2; 3) anliegt.

20. Steckelement nach Anspruch 2, **dadurch gekennzeichnet, dass** das Fluid ein Kühlmittel oder ein Kältemittel ist.

21. Steckelement nach Anspruch 2, **dadurch gekennzeichnet, dass** das Fluid flüssig, gelförmig oder gasförmig ist.

22. Steckelement nach Anspruch 2, **dadurch gekennzeichnet, dass** Fluid im Körperteil (21; 31; 32; 33) mit einem Druck beaufschlagbar ist.

23. Steckelement nach Anspruch 2, **dadurch gekennzeichnet, dass** das Körperteil (21; 31; 32; 33) zur Befüllung jeweils stirnseitig verschließbar ist.

24. Verfahren zur Herstellung eines Steckelements mit wenigstens einem Körperteil (21; 31; 32; 33), das als Werkstoff eine Formgedächtnislegierung (14) (shape-memory-alloy) umfasst und mit wenigstens einem Trägerteil (2; 3) derart verbindbar ist, dass das Körperteil (21; 31; 32; 33) zumindest bereichsweise mit seinem Umfang radial am Trägerteil (2; 3) anliegt, **dadurch gekennzeichnet, dass** das Körperteil (21; 31; 32; 33) abgekühlt wird und zu einer ersten Form derart mechanisch deformiert wird, dass es beim nachfolgenden Erwärmen in ein zweite Form überführt wird, in der das Körperteil (21; 31; 32; 33) radial fest und dicht am Trägerteil (2; 3) anliegt.
